# EUROPÄISCHE PATENTANMELDUNG

(11) **EP 1 553 507 A2**
(43) Veröffentlichungstag der Anmeldung: **13.07.2005**
(21) Anmeldenummer: 04029975.2
(22) Anmeldetag: 17.12.2004
(51) Int. Cl.: G06F 17/30

(54) **Verfahren zur informativen Beschreibung von Bildobjekten**

(30) Priorität: 09.01.2004 DE 102004001595
(71) Anmelder: Vodafone Holding GmbH, 40213 Düsseldorf (DE)
(72) Erfinder: Rosenberger, Frank, Dipl.-Ing., 40668 Meerbusch (DE)
(74) Vertreter: Weisse, Jürgen, Dipl.-Phys.

(57) **Zusammenfassung**

Die Erfindung betrifft ein Verfahren zur informativen Beschreibung von Bildobjekten (12a-24a) eines Bildes (32) bei dem ein Bildes (32) erfasst und digitalisiert wird. Das Bild (32) liegt als digitale Pixelmatrix vor und wird in einem Speicher (53) einer Rechnereinheit (50) gespeichert. Durch Bilderkennung (50) werden Bildobjekte (12a) des Bildes (32) ermittelt. Diesen Bildobjekten werden Begriffe (54) aus einer Datenbank (52) zugeordnet.

## Beschreibung

### Technisches Gebiet

Die Erfindung betrifft Verfahren zur informativen Beschreibung von Bildobjekten eines Bildes mit folgenden Verfahrensschritten:
(a) Erfassen und digitalisieren des Bildes als digitale Pixelmatrix,
(b) Speichern des Bildes in einem Speicher einer Rechnereinheit.

### Stand der Technik

Bilder können auf verschiedenste Art dauerhaft festgehalten werden. So besteht die Möglichkeit, ein Bild mit herkömmlicher Fotografie, d. h. mit Filmen, zu erzeugen. Diese Bilder können mit Hilfe eines Scanners digitalisiert und in einem Rechner verarbeitet werden. Mittlerweile ist es, aufgrund der fortgeschrittenen CCD-Technik (= Charge-Coupled-Device) möglich, mit so genannten Digitalkameras digitale Bilder zu erfassen. In einer Fortbildung der Digitalkameras sind diese mit Mobilfunkendgeräten kombiniert. So können digitale Bilder unmittelbar beispielsweise als MMS (= Multimedia Messages Service) über ein Mobilfunknetz an Dritte versandt werden. MMS ist ein Standard für Mobilfunkendgeräte zur Übermittlung von multimedialen Nachrichten.

Die so erfassten digitalen Bilder liegen in einem Speicher der Digitalkamera oder des Rechners als Pixelgrafiken vor. Jeder Bildpunkt bzw. Pixel einer solchen Pixelgrafik besteht aus einer digitalen Zahl, die eine bestimmte Farbe repräsentiert. Die zusammengesetzten Bildpunkte ergeben schließlich das Bild. Je mehr Bildpunkte pro Fläche vorhanden sind, desto höher ist die Auflösung des Bildes.

Durch immer schneller werdende Rechner und immer ausgefeilteren Algorithmen können Objekte eines digitalen Bildes erkannt werden. Eine solche Bilderkennung erfolgt beispielsweise bei der Schrifterkennung (OCR = Optical Character Recognition - opt. Zeichenerkennung). Aber auch andere Objekte als Buchstaben lassen sich anhand von markanten Punkten bzw. Linien erkennen. Die Bilderkennung ist eine Disziplin, die in viele Bereiche hineinragt. Digitale Bilderkennung wird z. B. auch bei computergesteuerten Automaten (Robotern), insbesondere in der Automobilindustrie benötigt, die ggf. verschiedene Objekte auseinander halten müssen, oder auch z. B. bei der automatischen Flugnavigation für Flugzeuge und Raketen, die nach Landschaftsbilder der Oberfläche navigieren. Die Anwendungsmöglichkeiten der Bilderkennung sind bereits sehr vielfältig. Neuronale Netze verhelfen der Bilderkennung zur Lernfähigkeit, so dass Automaten lernen, bestimmte Objekte zu erkennen.

Oft entdecken Reisende auf ihren Reisen Objekte, wie z. B. Gebäude, Plätze, Landschaften etc., von denen sie nicht wissen, um was für Objekte es sich handelt, und welche Historie dahinter steht. Wenn Sie dann nicht zufällig einen Reiseführer dabei haben, werden sie schwerlich erraten können, worum es sich bei dem Objekt handelt. Für den Reisenden ist es daher wünschenswert möglichst ohne größere Komplikationen an Informationen über diese Objekte zu gelangen.

Im Internet (World Wide Web) sind solche Informationen über bestimmte Objekte leicht abrufbar. Nachteil ist hierbei, dass nicht ohne weiteres auf das Internet zugegriffen werden kann.

### Offenbarung der Erfindung

Aufgabe der Erfindung ist es daher, ein Verfahren zu schaffen, welches die Nachteile des Standes der Technik vermeidet und es jemanden ermöglicht, an Informationen von Objekten eines Bildes jederzeit und an jedem Ort zu gelangen.

Die Aufgabe wird mit einem Verfahren zur informativen Beschreibung von Bildobjekten eines Bildes der eingangs genannten Art mit folgendem weiteren Verfahrensschritt gelöst:
(c) Bilderkennung zur Identifizierung der Bildobjekte und Zuordnen von Begriffen aus einer Datenbank den Bildobjekten des Bildes.

Das erfindungsgemäße Verfahren beruht auf dem Prinzip, anhand von digitalen Bildern einzelne Bildobjekte mit einer Bilderkennung zu identifizieren und diesen Bildobjekten dann anschließend Begriffe zuzuordnen. Die erforderlichen Begriffe für die einzelnen Objekte liegen in einer Datenbank, die dazu abgefragt werden kann vor.

In einer vorteilhaften Ausgestaltung des erfindungsgemäßen Verfahrens erfolgt die Erfassung des Bildes durch eine Kamera, insbesondere digitale Kamera. Die Bilder liegen insbesondere bei der digitalen Kamera in einer speicherbaren Form vor. Sie lassen sich daher durch diese Maßnahme gut für die Bilderkennung verarbeiten.

Eine bevorzugte Ausgestaltung des erfindungsgemäßen Verfahrens ergibt sich, wenn die Bilderkennung zur Identifizierung der Bildobjekte mit dem satellitengestützten Navigationssystem (GPS) vorgenommen wird. Durch diese Maßnahme erhält man zusätzliche Informationen von einem Objekt auf einem Bild, so dass es sich leichter identifizieren lässt, wenn der Standpunkt des Objektes bereits bekannt ist.

Vorteilhafterweise wird die informative Beschreibung auf einer Ausgabeeinheit, insbesondere eine Anzeige, ausgegeben. Damit können sofort die gesammelten Informationen über ein Objekt abgelesen werden.

Das Internet ist ein Netzwerk, mit einem unermesslichen Bestand an Daten und Informationen in allen Variationen über die verschiedensten Objekte. Eine besondere Ausbildung des erfindungsgemäßen Verfahrens erhält man daher, wenn die informative Beschreibung zu den Objekten, insbesondere über Suchmaschinen, aus dem Internet bezogen wird. Auf diese Weise wird dieser unermessliche Datenbestand, wie er sonst in keiner Datenbank zu finden ist, für die informative Beschreibung der Objekte herangezogen.

Je nach Bedarf kann es auch vorteilhaft sein, wenn die informative Beschreibung aus einer Datenbank einer Rechnereinheit bezogen wird. Dies ist z. B. dann vorteilhaft, wenn beispielsweise die aus dem Internet bezogen Daten nicht exakt genug vorliegen. Dann können exakte oder auch verkürzte Informationen aus einer Datenbank eines Rechners verwendet werden.

In einer weiteren bevorzugten Ausbildung des erfindungsgemäßen Verfahrens erfolgt die Bilderkennung durch Vektorisieren der digitalen Pixelmatrix zur Identifizierung der Bildobjekte des Bildes. Durch die Vektoriesierung wird der Datenbestand eines Bildobjektes erheblich reduziert und lässt sich in einer Rechnereinheit erheblich einfacher zur Identifizierung eines Objektes in einem Bild verarbeiten.

Mobilfunkendgeräte sind mittlerweile weit verbreitet. Sie lassen sich innerhalb der Mobilfunknetzzellen eines Mobilfunknetzes lokalisieren. Eine vorteilhafte Ausgestaltung der Erfindung ist daher, dass die Bilderkennung zur Identifizierung der Bildobjekte mit den Mobilfunknetzzellen vorgenommen wird. Jemand der die Informationen zu einem Objekt wünscht, muss sich im Grunde dann seinem Mobilfunkendgerät neben dieses Objekt stellen, um wie beim GPS, den Standort zu lokalisieren. Diese Standortinformationen hilft erheblich bei der Identifizierung eines Objektes.

Vorteilhafterweise ist in einer weiteren Ausgestaltung der Erfindung die Kamera zur Erfassung des Bildes in einem Mobilfunkendgerät vorgesehen oder mit einem Mobilfunkendgerät gekoppelt. Auf diese Weise liegt zum einen das Bild mit den Objekten, welche zu erkennen sind vor und zum anderen die Standortinformationen der der Mobilfunkzellen des Mobilfunknetzes. Ferner lässt sich über das Mobilfunknetz leicht eine Verbindung zu einem Rechner mit einer Bilderkennung erstellen, der die Rechnerarbeit leistet. Das Bild muss lediglich an den Rechner versandt werden, der die Bilderkennung zur Identifizierung von Objekten vornimmt. Das Versenden der Bildinformationen lässt sich beispielsweise per standardisierter MMS (= Multimedia Messages Service) durchführen. Dieser Rechner ist vorzugsweise mit einer Datenbank beziehungsweise mit dem Internet verbunden.

Vorzugsweise erfolgt die zur Bilderkennung mittels neuronaler Netze. Das hat den Vorteil, dass einmal gelernte Objekte jedesmal wieder erkannt werden. Außerdem lassen sich auch ähnliche Objekte exakter bestimmen und einer Informationen besser zuordnen.

Weitere Vorteile ergeben sich aus dem Gegenstand der Unteransprüche sowie aus der Zeichnung mit der dazugehörigen Beschreibung.

### Kurze Beschreibung der Zeichnung

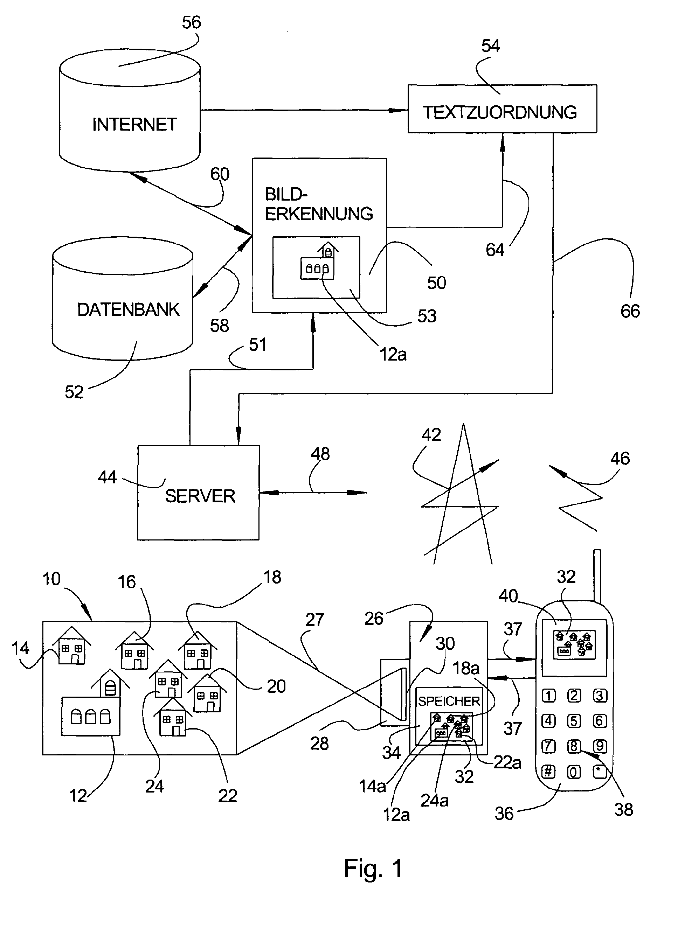

- Fig. 1: zeigt in einer schematischen Prinzipskizze ein Ausführungsbeispiel eines erfindungsgemäßen Verfahrens.

### Bevorzugtes Ausführungsbeispiel

In Fig. 1 wird mit 10 eine Landschaft bezeichnet, in der andeutungsweise eine Stadt zu sehen ist. Die Landschaft 10 enthält verschiedene Objekte 12, 14, 16, 18, 20, 22, 24. Im vorliegenden Ausführungsbeispiel handelt es sich bei den Objekten 12, 14, 16, 18, 20, 22, 24 um Gebäude. Einige Gebäude 18, 20, 22, 24 stehen etwas dichter beieinander, andere 12, 14, 16 etwas weiter auseinander. Diese Landschaft 10 wird mit einer Digitalkamera 26 aufgenommen, was mit Projektionsstrahlen 27 angedeutet wird. Die Landschaft 10 wird dazu in ein Objektiv 28 der Digitalkamera 26 projiziert. Hinter dem Objektiv 28 befindet sich ein CCD-Sensor 30, der die Landschaft 10 als ein digitales Bild 32 erfasst.

Das digitale Bild 32 liegt dann als Pixelgrafik vor und wird in einem Datenspeicher 34 gespeichert. Jeder Bildpunkt bzw. Pixel einer solchen Pixelgrafik besteht aus einer digitalen Zahl, die eine bestimmte Farbe repräsentiert. Die zusammengesetzten Bildpunkte ergeben schließlich das Bild. Je mehr Bildpunkte pro Fläche vorhanden sind, desto höher ist die Auflösung des digitalen Bildes 32. Von dem Datenspeicher 34 aus kann das digitale Bild 32 weiterverarbeitet oder auch gelöscht werden.

Im vorliegenden Ausführungsbeispiel ist die Digitalkamera 26 mit einem Mobilfunkendgerät 36 gekoppelt, d. h. Digitalkamera 26 und Mobilfunkendgerät 36 können untereinander Daten, insbesondere Daten des digitalen Bildes 32 austauschen. Pfeile 37 deuten den Datenaustausch zwischen der Digitalkamera 26 und dem Mobilfunkendgerät 36 an. Bei modernen Mobilfunkendgeräten 36 ist die Digitalkamera 26 in das Mobilfunkendgerät 36 integriert. Das Mobilfunkendgerät 36 weist neben einem Bedienerfeld 38 auch einer Anzeige 40 auf. Die Anzeige 40 dient dazu, mit dem Bedienerfeld 38 das Mobilfunkendgerät 36 zu steuern. Dies wird üblicherweise mit einer geeigneten Menüführung durchgeführt. Ferner kann auf der Anzeige 40 das digitale Bild 32 dargestellt werden. Die nicht dargestellte Menüführung, sowie das Bedienerfeld 38 dienen auch dazu, ein bestimmtes Bildobjekt 12a, beispielsweise das Gebäude 12 (eine Kirche) aus dem digitalen Bild 32 auszuwählen, um nähere Informationen zu diesem Bildobjekt 12a zu erhalten.

Das digitale Bild 32 wird dazu mittels Mobilfunkendgerät 36 über ein Mobilfunknetz 42 an einen Server 44 übermittelt. Das Mobilfunknetz 42 wird schematisch als Funkmast dargestellt und arbeitet beispielsweise nach dem GSM- oder UMTS-Standard. Das Versenden des digitalen Bildes 32 über Funk, sowie über Festnetz wird mit Pfeilen 46, 48 symbolisiert. Der Server 44 repräsentiert praktisch die gesamte Verwaltung und Vermittlung von digitalen Daten, welche in dem Mobilfunknetz 42, die anfallen.

Der Server 44 vermittelt die Daten des digitalen Bildes 32 an eine Bilderkennungseinheit 50, Pfeil 51. Die Bilderkennungseinheit 50 besteht aus einem Computer, in dem ein geeignetes Programm zur Bilderkennung abläuft. Zur Bearbeitung durch das Programm zur Bild Erkennung wird das digitale Bild 32 in einem Zwischenspeicher 53 der Bilderkennung einhalten 50 gespeichert. Das Programm zur Bilderkennung selektiert zunächst die Bildobjekte 12a-24a, die es als solche erkennt. Für die Bilderkennung kann es erforderlich sein, dass die Objekte, die es zu erfassen gilt, vektoriesiert werden. Außerdem kann bei der Bestimmung eines Objektes in einem Bild hilfreich sein, in welchem Bildzusammenhang mit anderen Objekten steht. Anschließend werden die Daten der Objekte 12-24 mit den Daten einer Datenbank 52 verglichen. Um den abzufragen den Datenbestand einzugrenzen werden noch Koordinaten von dem Mobilfunkendgerät 36 abgefragt, die sich beispielsweise aus der Mobilfunkzelle des Mobilfunknetzes 42 in dem sich das Mobilfunkendgerät 36 befindet, ergeben. Es können auch, falls ein entsprechender GPS-Empfänger in der Digitalkamera 26 bzw. in dem Mobilfunkendgerät 36 enthaltend ist, die genauen Koordinaten abgefragt werden. Sobald ein Objekt namentlich erkannt wurde, wird ihm ein Begriff zugeordnet, was mit Kasten 54 dargestellt wird. Außerdem können diesem Objekt, das jetzt begrifflich benannt werden kann, Informationen angehängt werden. Diese Informationen können das Objekt beschreiben. Dazu kann auf den größten vorhandenen Datenbestand, nämlich das Internet 56 zurückgegriffen werden. Bei ausreichender Kapazität können auch Filmsequenzen, die ein Objekt erläutern, an Stelle von informativen Texten verwendet werden.

Pfeile 58, 60 deuten den bidirektionalen Datenaustausch zwischen Datenbank 52, sowie Internet und Bilderkennungseinheit 50 an. Pfeil 62 symbolisiert, wie vom Internet dem erkannten Objekt, Pfeil 64, eine Beschreibung bzw. Informationen in dem Kasten 54 zugeordnet wird.

Wenn einem Objekt, das nun mit einem Begriff benannt werden kann, eine Beschreibung bzw. Informationen zugeordnet wurde, werden die entsprechenden Daten über den Server 44, Pfeil 66 und das Mobilfunknetz 42 zurück Mobilfünkendgerät 36 übermittelt. Auf der Anzeige 40 lässt sich nun die gewünschte Information zu dem ausgewählten Objekte des digitalen Bildes 32 abrufen.

## Patentansprüche

1. Verfahren zur informativen Beschreibung von Bildobjekten (12a-24a) eines Bildes (32) mit folgenden Verfahrensschritten:
(a) Erfassen und digitalisieren des Bildes (32) als digitale Pixelmatrix,
(b) Speichern des Bildes (32) in einem Speicher (53) einer Rechnereinheit (50),
**gekennzeichnet durch**
(c) Bilderkennung (50) zur Identifizierung der Bildobjekte (12a) und Zuordnen von Begriffen (54) aus einer Datenbank (52) den Bildobjekten (12a-24a) des Bildes (32).

2. Verfahren zur informativen Beschreibung von Bildobjekten (12a-24a) eines Bildes (32) nach Anspruch 1, **dadurch gekennzeichnet, dass** die Erfassung des Bildes (32) durch eine Kamera, insbesondere digitale Kamera (26), erfolgt.

3. Verfahren zur informativen Beschreibung von Bildobjekten (12a-24a) eines Bildes (32) nach einem der Ansprüche 1 oder 2, **dadurch gekennzeichnet, dass** die Bilderkennung (50) zur Identifizierung der Bildobjekte (12a-24a) mit dem satellitengestützten Navigationssystem (GPS) vorgenommen wird.

4. Verfahren zur informativen Beschreibung von Bildobjekten (12a-24a) eines Bildes (32) nach einem der Ansprüche 1 bis 3, **dadurch gekennzeichnet, dass** die informative Beschreibung auf einer Ausgabeeinheit, insbesondere eine Anzeige (40), ausgegeben wird.

5. Verfahren zur informativen Beschreibung von Bildobjekten (12a-24a) eines Bildes (32) nach einem der Ansprüche 1 bis 4, **dadurch gekennzeichnet, dass** die informative Beschreibung zu den Objekten (12a-24a), insbesondere über Suchmaschinen, aus dem Internet (56) bezogen wird.

6. Verfahren zur informativen Beschreibung von Bildobjekten (12a-24a) eines Bildes (32) nach einem der Ansprüche 1 bis 5, **dadurch gekennzeichnet, dass** die informative Beschreibung aus einer Datenbank (52) einer Rechnereinheit bezogen wird.

7. Verfahren zur informativen Beschreibung von Bildobjekten (12a-24a) eines Bildes (32) nach einem der Ansprüche 1 bis 7, **dadurch gekennzeichnet, dass** die Bilderkennung durch Vektorisieren der digitalen Pixelmatrix zur Identifizierung der Bildobjekte (12a-24a) des Bildes (32) erfolgt.

8. Verfahren zur informativen Beschreibung von Bildobjekten (12a-24a) eines Bildes (32) nach einem der Ansprüche 1 bis 7, **dadurch gekennzeichnet, dass** die Bilderkennung zur Identifizierung der Bildobjekte (12a-24a) mit den Mobilfunknetzzellen vorgenommen wird.

9. Verfahren zur informativen Beschreibung von Bildobjekten (12a-24a) eines Bildes (32) nach einem der Ansprüche 1 bis 8, **dadurch gekennzeichnet, dass** die Kamera (26) zur Erfassung des Bildes in einem Mobilfunkendgerät vorgesehen oder mit einem Mobilfunkendgerät (36) gekoppelt ist.

10. Verfahren zur informativen Beschreibung von Bildobjekten (12a-24a) eines Bildes (32) nach einem der Ansprüche 1 bis 9, **dadurch gekennzeichnet, dass** die Bilderkennung zur Identifizierung der Bildobjekte (12a-24a) mittels neuronaler Netze erfolgt.
